# EUROPEAN PATENT APPLICATION

(11) **EP 4 407 196 A1**
(43) Date of publication of application: **31.07.2024**
(21) Application number: 23153825.7
(22) Date of filing: 27.01.2023
(51) Int. Cl.: F16B 5/00, F16B 37/14, G09F 9/302, F16B 5/02

(54) **IMPROVED MULTIFUNCTIONAL ATTACHMENT DEVICE FOR BUILDING A VIDEO WALL**

(71) Applicant: Ledblox BV, 2640 Mortsel (BE)
(72) Inventor: VAN BEIRENDONCK, Wouter, 2640 Mortsel (BE)
(74) Representative: IPLodge bv

(57) **Abstract**

The invention relates to an improved multifunctional attachment device for connecting a display module to a frame module, the display module and the frame module being part of a modular exhibition stand or of a modular video wall. The multifunctional attachment device consists of a first component (300) and a second component (400) which are configured to engage each other, making it possible to fasten two frame modules to each other. At least one of the components is further configured to fasten a display module to a frame module. As such, only one type of attachment device is needed to build the exhibition stand or video wall.

## Description

### Technical field

The invention relates to an improved multifunctional attachment device for connecting a display module to a frame module, the display module and the frame module being part of a modular exhibition stand or of a modular video wall. The multifunctional attachment device consists of a first component and a second component which are configured to engage each other, making it possible to fasten two fame modules to each other. At least one of the components is further configured to fasten a display module to a frame module. As such, only one type of attachment device is needed to build the exhibition stand or video wall. Relevant CPC classifications are G09F9/3026, F16B5/0208 and F16B5/0283.

### Background

Belgian patent BE 1026534 B1 discloses a multifunctional connecting piece for connecting a display module to a frame module, the display module and the frame module being part of a modular exhibition stand or of a modular video wall. The multifunctional connector consists of a first bolt and a second bolt, and the total longitudinal length LB2 of the second bolt is less than the longitudinal length LP1 of a first pin of the first bolt. The second bolt includes an internal bore that receives the first pin and the first pin is slidable through the internal bore. A second pin of the second bolt includes an external thread with a diameter D2 greater than a diameter D1 of the external thread of the first pin. The multifunctional connector can also be screwed into a bus nut by means of the second pin. The present invention is an improvement over the disclosure of BE 1026534 B1, in that the attachment device is simpler and cheaper to manufacture, and easier to use.

A modular exhibition stand is a stand that is usually used for a limited period of time and can therefore be built up quickly and dismantled quickly. Such a stand consists of different frame modules, each frame module consisting of, for example, four profiles that form a frame, usually made of aluminum. The frame modules are preferably pre-assembled in a factory, so that only frame modules need to be attached to each other during the construction of the stand. Stand construction profiles that are assembled into frame modules are described, for example, in WO2016 / 027175.

The frame modules used for stand building usually include four profile sides that are attached to each other and form a rectangular frame. In the profiles, as discussed in WO2016 / 027175, grommets are made such that frame modules can be easily connected to each other by using connecting means placed through the grommets. A connector generally includes a bolt portion and a nut portion. For example, the lead-through openings in the profiles of the frame modules have an opening with a diameter between 20 and 35 mm so that the connecting means can easily pass through the openings and can be brought to fasten two side-by-side frame modules. An example of a connector that can be used with the profiles discussed in WO2016 / 027175 is shown in USD808254. Such a connector consists of two parts. An internally threaded first rod-shaped member, also called a bush nut, is fitted through the through holes of two juxtaposed profiles. A second part consists of a short bolt that can be screwed into the sleeve nut.

Frame modules may, for example, be placed side by side to form a larger wall, or frame modules may, for example, also be placed at an angle of 90 ° to form a lateral support wall or side wall in this way. A cover can be applied to the frame modules at the front and / or rear so that walls for the exhibition stand are thus formed. The covering can for instance consist of panels or of a fabric.

As described in, for example, BE1025102B1, a modular exhibition stand can also be provided with display modules. A display module contains a screen such as an LCD or LED screen that allows to display video images. The display module also includes a display frame to which the display is attached. Multiple display modules can also be placed side by side to form one large display, which is also called a video wall. To build such a large display, frame modules are attached to the display modules for support and/or to build a larger wall displaying video images combined with ad panels. A side wall consisting of frame modules may, for example, be placed perpendicular to the display modules for support. In another example, one large display, formed by multiple display modules, may be further surrounded by multiple frame modules, which are provided with advertising panels, for example. Depending on the design of the exhibition stand or video wall there are endless possibilities to combine the frame modules and the display modules.

The display frame of the frame module usually includes a number of installation holes with internal threads, for example of metric M6 or M8. These installation holes are, for example, provided on the side or rear of the frame module. In this way, using a suitable bolt, a frame module can be attached to a display frame of the display module. To fit the bolt, a through hole must therefore also be made in the profile of the frame module in order to be able to insert the bolt and then screw it into the installation hole of the display frame of the display module.

Because the construction and dismantling of stands has to be done quickly, there is a need to limit the number of different types of connecting elements and to simplify the construction of the stands.

### Summary of the invention

The present invention concerns an attachment device for building a modular video wall comprising at least one frame module and at least one display module, the attachment device comprising a first component and a second component, whereby the first component comprises:
- a bolt comprising a pin with a proximal end and a distal end, the pin comprising an external screw thread on the distal end and a bolt head on the proximal end;
- a first housing comprising a proximal end and a distal end, and an essentially cylindrical body therebetween along a longitudinal axis, the housing comprising a through hole along the longitudinal axis, the through hole configured for allowing the pin of the bolt to pass from the proximal end to the distal end of the first housing,

and whereby the second component comprises:
   - a second housing comprising a proximal end and a distal end, and an essentially cylindrical body therebetween along a longitudinal axis, and
   - a nut portion comprising an internal screw thread corresponding to the external screw thread of the pin, said nut portion located at or near the distal end of the second housing and configured for receiving the distal end of the pin along the longitudinal axis of the second housing,
whereby the cylindrical body of the first housing comprises a cylindrical body portion having a first outer diameter and a cylindrical distal portion at the distal end of the first housing, which distal portion comprises a second outer diameter smaller than the first outer diameter, the distal portion of the first housing further comprising a first inner diameter smaller than the second outer diameter, and
whereby the cylindrical body of the second housing comprises a cylindrical body portion having a third outer diameter which is essentially the same as the first outer diameter, and a first cylindrical distal portion at the distal end of the second housing, which first distal portion comprises a fourth outer diameter smaller than the third outer diameter, and essentially the same as the second outer diameter,
whereby the cylindrical body of the second housing further comprises a second cylindrical distal portion, closer to the distal end of the second housing than the first distal portion, and having a fifth outer diameter which is essentially the same as the first inner diameter of the distal portion of the first housing such that the second distal portion of the second housing fits closely into the distal portion of the first housing,
whereby a distal side surface of the distal portion of the first housing and a distal side surface of the first distal portion of the second housing are configured to be pressed against one another and to act as a stop if the longitudinal axis of the first housing is aligned with the longitudinal axis of the second housing and the pin is screwed into the nut portion through the through-hole of the first housing.

Alternatively, the distal portions of the housings may be switched. Hence, the present invention also concerns an attachment device for building a modular video wall comprising at least one frame module and at least one display module, the attachment device comprising a first component and a second component, whereby the first component comprises:
- a bolt comprising a pin with a proximal end and a distal end, the pin comprising an external screw thread on the distal end and a bolt head on the proximal end;
- a first housing comprising a proximal end and a distal end, and an essentially cylindrical body therebetween along a longitudinal axis, the housing comprising a through hole along the longitudinal axis, the through hole configured for allowing the pin of the bolt to pass from the proximal end to the distal end of the first housing,

and whereby the second component comprises:
   - a second housing comprising a proximal end and a distal end, and an essentially cylindrical body therebetween along a longitudinal axis, and
   - a nut portion comprising an internal screw thread corresponding to the external screw thread of the pin, said nut portion located at or near the distal end of the second housing and configured for receiving the distal end of the pin along the longitudinal axis of the second housing,
whereby the cylindrical body of the second housing comprises a cylindrical body portion having a first outer diameter and a cylindrical distal portion at the distal end of the second housing, which distal portion comprises a second outer diameter smaller than the first outer diameter, the distal portion of the second housing further comprising a first inner diameter smaller than the second outer diameter, and
whereby the cylindrical body of the first housing comprises a cylindrical body portion having a third outer diameter which is essentially the same as the first outer diameter, and a first cylindrical distal portion at the distal end of the first housing, which first distal portion comprises a fourth outer diameter smaller than the third outer diameter, and essentially the same as the second outer diameter,
whereby the cylindrical body of the first housing further comprises a second cylindrical distal portion, closer to the distal end of the first housing than the first distal portion, and having a fifth outer diameter which is essentially the same as the first inner diameter of the distal portion of the second housing such that the second distal portion of the first housing fits closely into the distal portion of the second housing,
whereby a distal side surface of the distal portion of the second housing and a distal side surface of the first distal portion of the first housing are configured to be pressed against one another and to act as a stop if the longitudinal axis of the first housing is aligned with the longitudinal axis of the second housing and the pin is screwed into the nut portion through the through-hole of the first housing.

The present invention allows to connect two frame modules of e.g. a video wall. Hereby, the first diameter and the third diameter may preferably correspond to the diameter of holes in the sides of the frame modules, thereby allowing the frames to be bolted together with the attachment device of the present invention. Additionally, the first component can be used to fasten a display module to a frame module. Hereby, the first diameter preferably corresponds to the diameter of holes in the sides of the frame modules, and the screw thread of the pin corresponds to an internal screw thread of a nut portion in the display module.

Furthermore, if the attachment device of the present invention is assembled, a cylindrical section with the second diameter is present in a middle portion of the assembled attachment device, which second diameter is smaller than the first diameter of essentially the rest of the attachment device. This allows the attachment device to be used even is part of the holes in the frames are covered, e.g. by a covering sheet inserted partially in the sides of a frame module and extending to within the holes in the sides.

The present invention also concerns a modular stand comprising a set of modules, preferably comprising one or more display modules and/or one or more frame modules as, for instance, described in WO2016 / 027175, the modules being attached to one another using a set of attachment devices in accordance with the present invention.

The present invention also concerns a first component of an attachment device as discussed in this document, and/or a second component of an attachment device as discussed in this document.

### Overview of the figures

Figure 1 shows a front view of a video wall consisting of two frame modules and a display module,
Figure 2 illustrates the use of a first attachment device according to the present invention to attach a frame module to a display module and the use of a second attachment device to attach two frame modules together.
Figures 3 shows a first component of an attachment device in accordance with the present invention.
Figure 4 shows a second component of an attachment device in accordance with the present invention. Figure 5 shows an assembled attachment device according to the present invention.

### Detailed discussion of the invention

The present invention is now discussed with reference to the figures, which illustrate embodiments of the present invention.

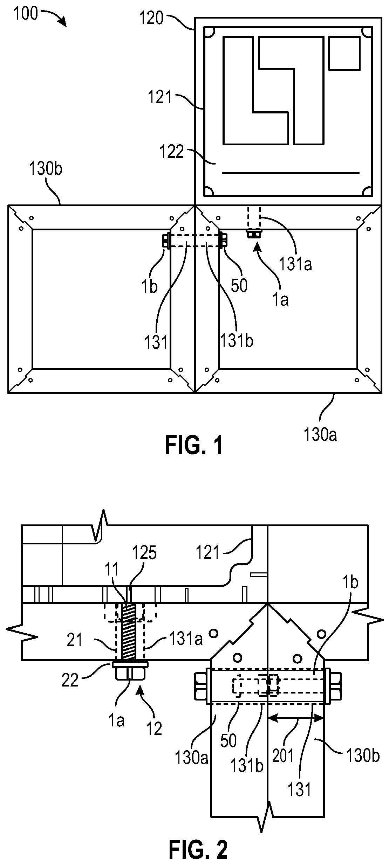

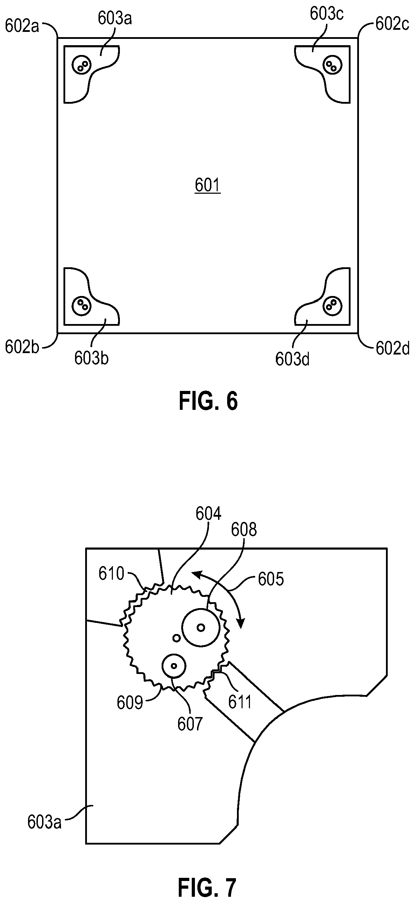

An example of an embodiment of a video wall 100 is shown in Fig. 1, where a front of a video wall is shown. Figures 1 and 2 are very similar to figs. 6 and 7 of Belgian patent BE 1026534 B1. However, figs. 1 and 2 show the attachment devices in accordance with the present invention. The video wall 100 comprises a first frame module 130a and a display module 120. In this example, a second frame module 130b is also shown. The display modules and frame modules are the building blocks of the modular video wall, and infinite configurations are possible to combine one or more display modules with one or more frame modules.

As shown in Fig. 1, the first frame module 130a consists of four sides that form a rectangular frame and, for example, a first side has a first front opening 131a. For example, the profiles used to make the frame are made of aluminum. An example of profiles to form a frame and having through-holes is described in WO2016 / 027175. Depending on the embodiment of the frame modules, different feed-through openings can be placed on each side of the frame.

The front and/or back of the frame modules usually become a panel or cloth. This panel or cloth can be spanned across the front or back surface be inserting the ends of the panel or cloth into slots at the edge of the frame, and may thereby be spanned partially across the though holes of the frame (131a, 131b), which could hinder the attachment device. For example, advertisements can be displayed on these panels or canvas, for example advertising, in combination with the use of video images with the display modules.

The first display module 120 shown in Fig. 1 consists of a display 122, for example an LED screen, and a display frame 121. The display frame 121 has four sides forming a rectangular frame and the display 121 is attached to a front of the display frame 121. In one side of the display frame 121, an installation hole 125 (see fig. 2) is provided with an internal screw thread. Depending on the embodiment of the display frames 121, different installation holes can be placed on each side of the frame or installation holes with an internal screw thread can also be provided at the rear of the display frame.

The first display module 120 shown in Fig. 1 is attached to a first frame module 130a using the first component of a first attachment device 1a. This is further shown in detail in Fig.2, where part of the back of the video wall of Fig. 1 is shown. The multifunctional connector 1a is inserted through the first through hole 131a of the first frame module and the first pin 11 of the first bolt 10 of the first multifunctional connector 1 is screwed into the installation hole 125 of the display frame 121 so that the first frame module 131a is attached to the display module 120.

As shown in Fig. 1 and Fig. 2, the second frame module 130b is attached to the first frame module 130a using an attachment device according to the present invention as discussed above.

The first frame module 130a shown in Fig. 1 has a second side with a second through-opening 131b, and the second frame module 130b also consists of four sides forming a rectangular frame and one of the four sides having a through-hole 131. The attachment device is passed through the second feed-through opening 131b of the first frame module 130a and the feed-through opening 131 of the second frame module 130b arranged to interconnect the first and second frame module. As discussed above, the pin of the first component 1b is screwed into the nut component of the second component 50 to form an assembled attachment device.

When a video wall 100 is constructed in this way consisting of frame modules and display modules, this can be done using only the attachment devices of the present invention.

The first housing is preferably made of the same material as the second housing of the attachment device, for example, they are made of a plastic material or aluminium or a combination thereof.

In a further aspect, the invention relates to the use of an attachment device and/or a first component thereof as discussed above to attach a display module to a frame module, and wherein the display module and the frame module are part of a modular exhibition stand or of a modular video wall 100. The present invention also relates to the use of an attachment device and/or a first component thereof as discussed above to interconnect two frame modules 130a, 130b and wherein the two frame modules are part of a modular exhibition stand or of a modular video wall 100.

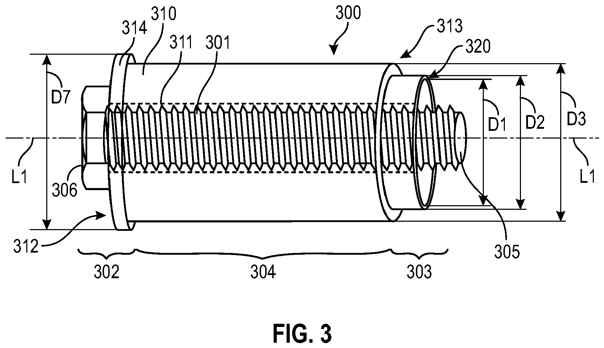

An embodiment of the attachment device according to the present invention is shown in figs. 3-5. Fig. 3 shows a first component (300), comprising a bolt comprising a pin (301) with a proximal end and a distal end, the pin comprising an external screw thread (305) on the distal end and a bolt head (306) on the proximal end. The first component comprise also a first housing (310) comprising a proximal end (312) and a distal end (313), and an essentially cylindrical body therebetween along a longitudinal axis (L1), the housing (310) comprising a through hole (311) along the longitudinal axis. The through hole is configured for allowing the pin (301) of the bolt to pass from the proximal end to the distal end of the first housing. In an embodiment, the bolt can be removably arranged in the first housing. In an embodiment, the bolt can be arranged in the first housing in a restricted manner, thereby ensuring it cannot easily or accidentally slip out from the first housing, e.g. during handling.

The cylindrical body (310) of the first housing comprises a cylindrical body portion (304) having a first outer diameter (D3) and a cylindrical distal portion (303) at the distal end (313) of the first housing, which distal portion (303) comprises a second outer diameter (D2) smaller than the first outer diameter (D3), the distal portion of the first housing further comprising a first inner diameter (D1) smaller than the second outer diameter. In order for the pin to be able to pass through the housing, it should be clear that the diameter of the pin is smaller than the first inner diameter. In an embodiment, the first housing comprises a proximal portion (302) having a diameter (D7) larger than the first outer diameter for ensuring that a rim (314) of the proximal portion can contact and press against a frame module when the first component is inserted in a frame hole.

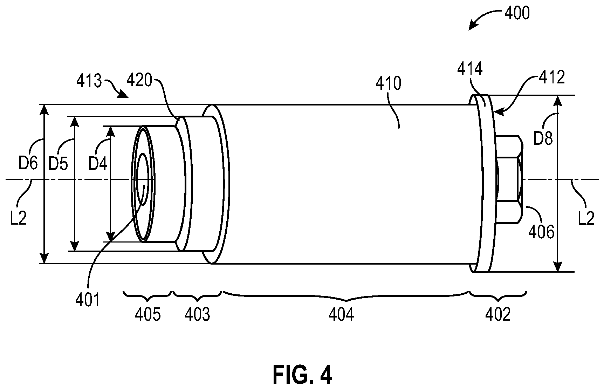

Fig. 4 shows a second component (400) in accordance with the present invention, comprising a second housing (410) comprising a proximal end (412) and a distal end (413), and an essentially cylindrical body therebetween along a longitudinal axis (L2). The second component comprises a nut portion (401) comprising an internal screw thread corresponding to the external screw thread of the pin (301). The nut portion (301) is located at or near the distal end (413) of the second housing (410) and is configured for receiving the distal end of the pin (301) along the longitudinal axis of the second housing (L2).

The cylindrical body (410) of the second housing comprises a cylindrical body portion (404) having a third outer diameter (D6) which is essentially the same as the first outer diameter (D3). The cylindrical body also comprises a first cylindrical distal portion (403) at the distal end of the second housing, which first distal portion (403) comprises a fourth outer diameter (D5) smaller than the third outer diameter (D6), and essentially the same as the second outer diameter (D2). The cylindrical body of the second housing (410) further comprises a second cylindrical distal portion (405), closer to the distal end (413) of the second housing than the first distal portion (403), and having a fifth outer diameter (D4) which is essentially the same as the first inner diameter (D1) of the distal portion (303) of the first housing such that the second distal portion of the second housing fits closely into the distal portion of the first housing.

In an embodiment, the second housing comprises a proximal portion (402) having a diameter (D8) larger than the third outer diameter for ensuring that a rim (414) of the proximal portion can contact and press against a frame module when the second component is inserted in a frame hole.

A distal side surface (320) of the distal portion (303) of the first housing and a distal side surface (420) of the first distal portion (403) of the second housing are configured to be pressed against one another if the longitudinal axis (L1) of the first housing is aligned with the longitudinal axis (L2) of the second housing and the pin (301) is screwed into the nut portion (401) through the through-hole (311) of the first housing. These side surfaces thus act as a stop.

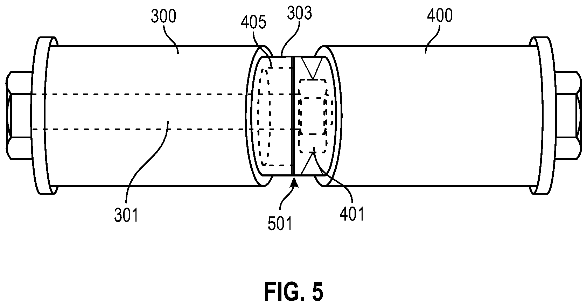

An embodiment of an assembled attachment device according to the present invention is shown in fig. 5. Hereby, the first component (300) is attached to the second component (400) with the bolt being screwed with the pin (301) into the nut portion (401). Hereby, the second cylindrical distal portion (405) of the second housing is inserted into the distal portion (303) of the first housing. As indicated, the fifth outer diameter (D4) is essentially the same as the first inner diameter (D1) in order to have a close fit, thereby insuring a stable and correct alignment of the components. Preferably hereby, the fifth outer diameter (D4) is hereby less than 10% smaller than the first inner diameter, more preferably less than 5% smaller, still more preferably less than 2% smaller, yet more preferably less than 1% smaller. The side surfaces (320, 420) of the distal portion (303) of the first housing and of the first distal portion (403) of the second housing are seen to almost contact one another (501). This is the usual situation when the attachment device is applied to connect two modules, and in particular two frame modules in a stand: typically the lengths of the housings, as measured from the side surface up to and including the cylindrical body portion, is smaller than a predefined length, preferably les than 10% smaller, more preferably less than 5% smaller, still more preferably less than 2% smaller, yet more preferably less than 1% smaller than the predefined length, said predefined length corresponding to a thickness (201) of a frame (130a, 130b) of a frame module.

Exemplary standard sizes for frame modules and display modules are typically 500mm x 500mm or 496 mm x 496 mm. The frames of these modules are preferably made of aluminium and are typically 55 mm or 62 mm thick. The frame modules comprise through holes which are typically about 30 mm in diameter. Hence, preferably, the first outer diameter and the third outer diameter are about 30 mm, preferably less than 10 % smaller, more preferably less than 5% smaller, still more preferably less than 2% smaller, yet more preferably less than 1% smaller than 30mm. Preferably, the second outer diameter and the fourth outer diameter are about 25 mm, preferably within 10 %, more preferably within 5%, still more preferably within 2%, yet more preferably within 1% of 25 mm. Preferably, the first inner diameter and the fifth outer diameter are about 20 mm, preferably within 10 %, more preferably within 5%, still more preferably within 2%, yet more preferably within 1% of 20 mm.

In an embodiment, the first housing and/or the second housing comprise a length, as measured from the side surface up to and including the cylindrical body portion, is smaller than 55 mm, preferably les than 10% smaller, more preferably less than 5% smaller, still more preferably less than 2% smaller, yet more preferably less than 1% smaller than 55 mm. Note that components with these lengths can also be used to connect frames that are 62 mm thick.

In an embodiment, the first housing and/or the second housing comprise a length, as measured from the side surface up to and including the cylindrical body portion, is smaller than 62 mm, preferably les than 10% smaller, more preferably less than 5% smaller, still more preferably less than 2% smaller, yet more preferably less than 1% smaller than 62 mm.

In an embodiment, the second housing comprises a set of inward protrusions at the distal end, said protrusions being configured to engage the bolt head (306) of the first component in order to allow a user to easily fasten the bolt head into a nut portion of another second component or of a display frame, i.e. the protrusions allow the second component to function as a wrench for screwing the bolt with its pin into the nut portion.

Fig. 6 illustrates a display module according to an aspect of the present invention. Fig. 7 shows a corner component for such a display module.

In order to allow a display module to be connected perpendicularly to a frame module, such that the frame module can support the display module and prevent the display module from tipping over, the display module (600) preferably comprises at least one, and preferably four, corner component (603a, 603b, 603c, 603d) at a corner (602a, 602b, 602c, 602d), preferably at each corner, of a back side (601) of the display module. Said corner component (603a) comprises a rotatable wheel (604) which is configured to rotate (605) around a wheel center (606) within a plane parallel to the plane of the display module, the corner component comprising at least two off-center screw holes (607, 608) which are positioned at different radial distances from the wheel center (606) and such that at a first position of the rotatable wheel, a first screw hole is positioned at a first predefined distance from the edges of the corner of the display module and at a second position of the rotatable wheel, a second screw hole is positioned at a second predefined distance from the edges of the corner of the display module, the second predefined distance being different from the first predefined distance. The rotatable wheel allows to change the distance between the edge of the display module and the screw hole used for attaching the display module perpendicularly to a frame module, thereby allowing the display module to be attached to frame modules having different frame thicknesses. Since there are typically two standard thicknesses, 55mm and 62 mm, the first and second predefined distance may preferable correspond to these standard thicknesses respectively. Basically, the first screw hole can be rotated such that its center reaches a position at about 27.5 mm from at least one of the edges which form the corner of the frame, while the second screw hole can be rotated such that its center reaches a position at about 31 mm from at least one of the edges forming the corner of the frame. Note that in an embodiment, the first screw hole can be rotated such that its center reaches a position at about 27.5 mm from each of the edges which form the corner of the frame, while the second screw hole can be rotated such that its center reaches a position at about 31 mm from each of the edges of the corner of the frame. In an embodiment, the first screw hole and/or the second screw hole can be rotated such that its center reaches a position at about 27.5 mm from one of the edges which form the corner of the frame and at about 31 mm from the other edge which forms the corner of the frame. As such, the edges of the display can be lined up with the frame of the frame module when attached perpendicularly thereto, and this for frame modules having either frame thickness. Preferably, the rotatable wheel comprises an edge which comprises engagement means (609), and the corner component comprises one or more engaging elements (610, 611) positioned configured to engage the engaging means of the wheel in order to restrict the wheel from freely rotating, e.g. through friction.

The present invention also relates to a display module comprising a corner component as described above and to a corner component such as described above.

## Claims

1. An attachment device for building a modular video wall comprising at least one frame module and at least one display module, the attachment device comprising a first component and a second component, whereby the first component comprises:
- a bolt comprising a pin with a proximal end and a distal end, the pin comprising an external screw thread on the distal end and a bolt head on the proximal end;
- a first housing comprising a proximal end and a distal end, and an essentially cylindrical body therebetween along a longitudinal axis, the housing comprising a through hole along the longitudinal axis, the through hole configured for allowing the pin of the bolt to pass from the proximal end to the distal end of the first housing,
and whereby the second component comprises:
- a second housing comprising a proximal end and a distal end, and an essentially cylindrical body therebetween along a longitudinal axis, and
- a nut portion comprising an internal screw thread corresponding to the external screw thread of the pin, said nut portion located at or near the distal end of the second housing and configured for receiving the distal end of the pin along the longitudinal axis of the second housing,
whereby the cylindrical body of the first housing comprises a cylindrical body portion having a first outer diameter and a cylindrical distal portion at the distal end of the first housing, which distal portion comprises a second outer diameter smaller than the first outer diameter, the distal portion of the first housing further comprising a first inner diameter smaller than the second outer diameter, and
whereby the cylindrical body of the second housing comprises a cylindrical body portion having a third outer diameter which is essentially the same as the first outer diameter, and a first cylindrical distal portion at the distal end of the second housing, which first distal portion comprises a fourth outer diameter smaller than the third outer diameter, and essentially the same as the second outer diameter,
whereby the cylindrical body of the second housing further comprises a second cylindrical distal portion, closer to the distal end of the second housing than the first distal portion, and having a fifth outer diameter which is essentially the same as the first inner diameter of the distal portion of the first housing such that the second distal portion of the second housing fits closely into the distal portion of the first housing,
whereby a distal side surface of the distal portion of the first housing and a distal side surface of the first distal portion of the second housing are configured to be pressed against one another and to act as a stop if the longitudinal axis of the first housing is aligned with the longitudinal axis of the second housing and the pin is screwed into the nut portion through the through-hole of the first housing.

2. An attachment device for building a modular video wall comprising at least one frame module and at least one display module, the attachment device comprising a first component and a second component, whereby the first component comprises:
- a bolt comprising a pin with a proximal end and a distal end, the pin comprising an external screw thread on the distal end and a bolt head on the proximal end;
- a first housing comprising a proximal end and a distal end, and an essentially cylindrical body therebetween along a longitudinal axis, the housing comprising a through hole along the longitudinal axis, the through hole configured for allowing the pin of the bolt to pass from the proximal end to the distal end of the first housing,
and whereby the second component comprises:
- a second housing comprising a proximal end and a distal end, and an essentially cylindrical body therebetween along a longitudinal axis, and
- a nut portion comprising an internal screw thread corresponding to the external screw thread of the pin, said nut portion located at or near the distal end of the second housing and configured for receiving the distal end of the pin along the longitudinal axis of the second housing,
whereby the cylindrical body of the second housing comprises a cylindrical body portion having a first outer diameter and a cylindrical distal portion at the distal end of the second housing, which distal portion comprises a second outer diameter smaller than the first outer diameter, the distal portion of the second housing further comprising a first inner diameter smaller than the second outer diameter, and
whereby the cylindrical body of the first housing comprises a cylindrical body portion having a third outer diameter which is essentially the same as the first outer diameter, and a first cylindrical distal portion at the distal end of the first housing, which first distal portion comprises a fourth outer diameter smaller than the third outer diameter, and essentially the same as the second outer diameter,
whereby the cylindrical body of the first housing further comprises a second cylindrical distal portion, closer to the distal end of the first housing than the first distal portion, and having a fifth outer diameter which is essentially the same as the first inner diameter of the distal portion of the second housing such that the second distal portion of the first housing fits closely into the distal portion of the second housing,
whereby a distal side surface of the distal portion of the second housing and a distal side surface of the first distal portion of the first housing are configured to be pressed against one another and to act as a stop if the longitudinal axis of the first housing is aligned with the longitudinal axis of the second housing and the pin is screwed into the nut portion through the through-hole of the first housing.

3. An attachment device according to claim 1 or 2, whereby the first housing and/or the second housing is made of a plastic material.

4. An attachment device according to any of the previous claims, whereby the first housing and/or the second housing comprise a length, as measured from the side surface up to and including the cylindrical body portion, which length is smaller than a predefined length, preferably less than 10% smaller, more preferably less than 5% smaller, still more preferably less than 2% smaller, yet more preferably less than 1% smaller than the predefined length, said predefined length corresponding to a thickness (201) of a frame (130a, 130b) of a frame module.

5. An attachment device according to any of the previous claims, whereby the first outer diameter and the third outer diameter are about 30 mm, the second outer diameter and the fourth outer diameter are about 25 mm, and the first inner diameter and the fifth outer diameter are about 20 mm.

6. A first component for an attachment device according to any of the claims 1 to 5, comprising:
- a bolt comprising a pin with a proximal end and a distal end, the pin comprising an external screw thread on the distal end and a bolt head on the proximal end;
- a first housing comprising a proximal end and a distal end, and an essentially cylindrical body therebetween along a longitudinal axis, the housing comprising a through hole along the longitudinal axis, the through hole configured for allowing the pin of the bolt to pass from the proximal end to the distal end of the first housing,
whereby the cylindrical body of the first housing comprises a cylindrical body portion having a first outer diameter and a cylindrical distal portion at the distal end of the first housing, which distal portion comprises a second outer diameter smaller than the first outer diameter, the distal portion of the first housing further comprising a first inner diameter smaller than the second outer diameter,
whereby a distal side surface of the distal portion of the first housing is configured to be pressed against a corresponding side surface of a second component of the attachment device, thereby acting as a stop if the longitudinal axis of the first housing is aligned with the longitudinal axis of the second housing and the pin is screwed into the nut portion through the through-hole of the first housing.

7. A second component for an attachment device according to any of the claims 1 to 5, comprising:
- a second housing comprising a proximal end and a distal end, and an essentially cylindrical body therebetween along a longitudinal axis, and
- a nut portion comprising an internal screw thread corresponding to the external screw thread of the pin, said nut portion located at or near the distal end of the second housing and configured for receiving the distal end of the pin along the longitudinal axis of the second housing,
whereby the cylindrical body of the second housing comprises a cylindrical body portion having a third outer diameter, and a first cylindrical distal portion at the distal end of the second housing, which first distal portion comprises a fourth outer diameter smaller than the third outer diameter,
whereby the cylindrical body of the second housing further comprises a second cylindrical distal portion, closer to the distal end of the second housing than the first distal portion, and having a fifth outer diameter,
whereby a distal side surface of the first distal portion of the second housing is configured to be pressed against a corresponding side surface of the second component, thereby acting as a stop if the longitudinal axis of the first housing is aligned with the longitudinal axis of the second housing and the pin is screwed into the nut portion through the through-hole of the first housing.

8. A modular stand comprising a set of modules comprising one or more display modules and/or one or more frame modules, the modules being attached to one another using a set of attachment devices according to any of the claims 1 to 5.

9. A kit for a modular stand, comprising one or more display modules and/or one or more frame modules, and one or more attachment device according to any of the claims 1 to 5.

10. A modular stand according to claim 8 or a kit for a modular stand according to claim 9, comprising at least one display module comprising a corner component at a corner (602a, 602b, 602c, 602d), of a back side (601) of the display module, said corner component (603a) comprising a rotatable wheel (604) which is configured to rotate (605) around a wheel center (606) within a plane parallel to the plane of the display module, the corner component comprising at least two off-center screw holes (607, 608) which are positioned at different radial distances from the wheel center (606) and such that at a first position of the rotatable wheel, a first screw hole is positioned at a first predefined distance from the edges of the corner of the display module and at a second position of the rotatable wheel, a second screw hole is positioned at a second predefined distance from the edges of the corner of the display module, the second predefined distance being different from the first predefined distance.

11. Display module for a modular stand according to claim 7 or for a kit for a modular stand according to claim 9, comprising a corner component at a corner (602a, 602b, 602c, 602d), of a back side (601) of the display module, said corner component (603a) comprising a rotatable wheel (604) which is configured to rotate (605) around a wheel center (606) within a plane parallel to the plane of the display module, the corner component comprising at least two off-center screw holes (607, 608) which are positioned at different radial distances from the wheel center (606) and such that at a first position of the rotatable wheel, a first screw hole is positioned at a first predefined distance from the edges of the corner of the display module and at a second position of the rotatable wheel, a second screw hole is positioned at a second predefined distance from the edges of the corner of the display module, the second predefined distance being different from the first predefined distance.

12. A corner element for a display module according to claim 11, comprising a rotatable wheel (604) which is configured to rotate (605) around a wheel center (606) within a plane parallel to the plane of the display module, the corner component comprising at least two off-center screw holes (607, 608) which are positioned at different radial distances from the wheel center (606) and such that at a first position of the rotatable wheel, a first screw hole is positioned at a first predefined distance from the edges of the corner of the display module and at a second position of the rotatable wheel, a second screw hole is positioned at a second predefined distance from the edges of the corner of the display module, the second predefined distance being different from the first predefined distance.

13. A kit comprising at least one attachment device according to any of the claims 1 to 5, and a corner element according to claim 12.
